# EUROPEAN PATENT APPLICATION

(11) **EP 1 172 990 A1**
(43) Date of publication of application: **16.01.2002**
(21) Application number: 00610073.9
(22) Date of filing: 14.07.2000
(51) Int. Cl.: H04M 1/65

(54) **Authorization method for recording information exchanged between telecommunications devices**

(71) Applicant: TELEFONAKTIEBOLAGET L M ERICSSON (publ), 126 25 Stockholm (SE)
(72) Inventor: Chaplin, Catriona, 224 72 Lund (SE); Onshage, Anders, 217 53 Malmö (SE)
(74) Representative: Boesen, Johnny Peder

(57) **Abstract**

In a method of recording information exchanged between first (1; 22) and second (5) telecommunications devices, the recording is performed under control of the first telecommunications device. The method comprises the steps of sending from the first telecommunications device (1; 22) to the second telecommunications device (5) a message requesting authorisation for the recording, and performing the recording only if a responding message giving the authorisation is received by the first telecommunications device (1; 22) in response to the requesting message. In this way the remote party is ensured that the telephone conversations are not recorded without his knowledge and permission, and the different national laws concerning voice recording can be complied with.

## Description

### Technical Field of the Invention

The invention relates to a method of recording information exchanged between first and second telecommunications devices, said recording being performed under control of the first telecommunications device. The invention further relates to a method of prohibiting such recording, and to telecommunications devices and an electronic accessory device.

### Description of Related Art

Today the use of telecommunications devices is rapidly increasing and often there is a wish to be able to record or store the information exchanged between a pair of telecommunications devices. An example could be a telephone conversation between stationary or mobile telephones. In stead of having to write down information such as phone numbers, names, or addresses during a telephone conversation it is much more convenient to record the conversation.

US 5 995 824 discloses a cellular phone voice recorder which allows such recording from a cellular phone. A memory is included within the cellular phone to provide storage of information recorded during a call to or from the phone for later retrieval by the subscriber. When a RECORD key is pressed by the subscriber, any information spoken by either the calling or called party will be recorded and stored in the memory. The subscriber can access the stored information at a later time by pressing another function key. Alternatively, the voice recording feature can be implemented in the network to which the cellular phone is connected. The recording is still started and stopped from the cellular phone by the subscriber.

However, users do not always know that a telephone conversation is being recorded, and many people do not like that their telephone conversations are recorded by the other party without their knowledge. Therefore, voice recording of telephone conversations has been (or will be) regulated by law in some countries, but it is often regulated differently in different countries. Some countries require that an indication is given by the recording party to the other party before the recording is started.

Some institutions, such as banks and insurance companies, often state in literature provided to their customers that telephone calls to or from their offices may be recorded. This may cover the legal requirements, but it is not always obvious to the remote party at the time of a given call that this call is actually recorded.

Recording telephones are known that send a signal, such as a beep, to the remote party before the start of a voice recording. However, it is not always obvious to the remote party that this beep means that the call is about to be recorded. It could easily be mistaken for something else, e.g. a signal telling that a new timing period is starting, or possibly a DTMF tone which is transmitted whenever a key is pressed.

Therefore, it is an object of the invention to provide a method of the above-mentioned type in which the remote party is ensured that the telephone conversations are not recorded without his knowledge and permission, and which complies with the different national requirements concerning voice recording.

### Summary

According to the invention the object is achieved in that the method comprises the steps of sending from the first telecommunications device to the second telecommunications device a message requesting authorisation for the recording, and performing the recording only if a responding message giving the authorisation is received by the first telecommunications device in response to the requesting message.

When the recording is only possible after the reception of an authorisation from the second telecommunications device, which is under control of the remote party, it is ensured that this party has accepted the recording. This will also fulfil the requirements which are presently known.

The invention further relates to a corresponding method of prohibiting such recording.

When the requesting message is sent as a voice message, the remote party can understand it directly and give his response, either by voice or e.g. by pressing a key on the keypad of the telecommunications device. Alternatively, the requesting message can be sent as a text message, which is then presented on a display of the telecommunications device.

When the method comprises the step of sending the responding message giving authorisation from the second telecommunications device under control of a user of the second telecommunications device, the user is given the possibility to give his acceptance or not for each individual call.

Alternatively, the method may comprise the step of sending the responding message giving authorisation from the second telecommunications device automatically. This embodiment is convenient if the user has decided that he will accept the recording of any call. In this situation there is no need to give a new authorisation each time. The user could also decide that he will never accept a call to be recorded, and then the method could comprise the step of sending the responding message denying authorisation from the second telecommunications device automatically.

In an expedient embodiment the method comprises the step of advising a user of the first telecommunications device of whether a responding message giving authorisation for recording is received. This could be done by voice or text and allows the user to decide how to continue the conversation in dependence on whether the recording was authorised or not.

When the information is further exchanged between the first telecommunications device and at least one additional telecommunications device, i.e. a conference call situation, the recording should only be performed if a responding message giving the authorisation is also received from the at least one additional telecommunications device. In this way it is ensured that every party to the conversation has the possibility of avoiding the recording.

As mentioned, the invention also relates to a telecommunications device for exchanging information with other telecommunications devices, said telecommunications device being equipped to perform a recording of said exchanged information. When the telecommunications device can assume a mode in which it is adapted to send to another telecommunications device a message requesting authorisation for the recording of information to be exchanged with said other telecommunications device, and perform said recording only if a responding message giving said authorisation is received in response to said requesting message, a remote party is ensured that his telephone conversations are not recorded without his knowledge and permission, and the different national requirements concerning voice recording can be complied with.

When the telecommunications device comprises speech recognition means to detect whether the responding message in response to said requesting message, in case the responding message is a voice message, gives said authorisation, a system is achieved in which the remote party just has to answer with his voice, by e.g. saying "yes" or "no".

In an expedient embodiment the telecommunications device comprises means for advising a user of the device of whether a responding message giving authorisation for recording is received. This could be done by voice or text and allows the user to decide how to continue the conversation in dependence on whether the recording was authorised or not.

When the telecommunications device is further adapted to allow said recording if a general authorisation for the recording has been received and stored in the device, it is possible for e.g. a national telephone network in a country not requesting an authorisation procedure to send a signal to a recording device, e.g. when the device connects with that network, to indicate that conversations may be recorded without the acceptance of the remote party. Thus the device can comply with different requirements.

In an expedient embodiment the telecommunications device is a mobile telephone.

The invention also relates to a telecommunications device for exchanging information with other telecommunications devices. The telecommunications device can be programmed to respond automatically to a received message requesting authorisation for the recording of information to be exchanged with another telecommunications device. This embodiment is convenient if the user of the device has decided that he will accept the recording by other parties of any call. In this situation there is no need to give a new authorisation each time.

As mentioned, the invention also relates to an electronic accessory device connectable to a telecommunications device for exchanging information with other telecommunications devices, said electronic accessory device being equipped to perform a recording of said exchanged information. When the electronic accessory device can assume a mode in which it is further adapted to instruct a telecommunications device to which it is connected to send to another telecommunications device a message requesting authorisation for the recording of information to be exchanged between the two telecommunications devices, and perform said recording only if a responding message giving said authorisation is received in response to said requesting message, an electronic accessory device ensuring a remote party that his telephone conversations are not recorded without his knowledge and permission is achieved, and the different national requirements concerning voice recording can be complied with.

In an expedient embodiment the electronic accessory device comprises means for advising a user of the device of whether a responding message giving authorisation for recording is received. This could be done by voice or text and allows the user to decide how to continue the conversation in dependence on whether the recording was authorised or not.

When the electronic accessory device is further adapted to allow said recording if a general authorisation for the recording has been received and stored in the device, it is possible for e.g. a national telephone network in a country not requesting an authorisation procedure to send a signal to a telecommunications device to which the accessory device is connected, e.g. when the telecommunications device connects with that network, to indicate that conversations may be recorded without the acceptance of the remote party. Thus the device can comply with different law requirements.

### Brief Description of the Drawings

The invention will now be described more fully below with reference to the drawing, in which
figure 1 shows a mobile telephone with recording facilities according to the invention,
figure 2 shows a separate accessory device connectable to a mobile telephone,
figure 3 shows a flow chart of a request procedure according to the invention,
figure 4 shows a flow chart of an automatic responding procedure according to the invention, and
figure 5 shows a flow chart of a modification to the flow chart of figure 3.

### Detailed Description of Embodiments

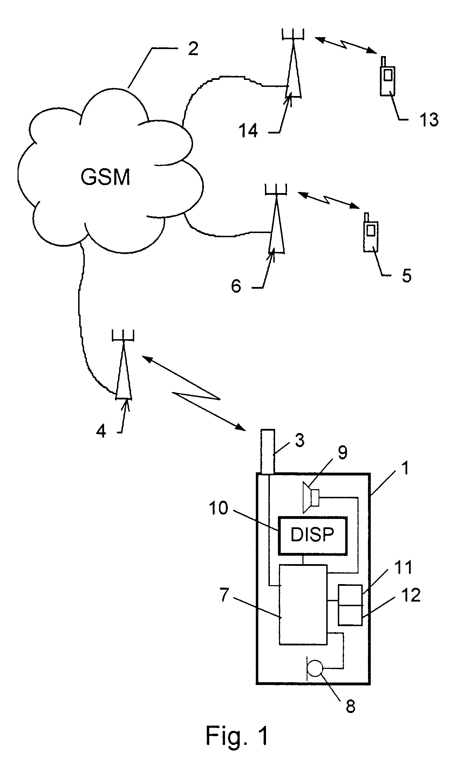

Figure 1 shows an example of how the invention may be implemented. A mobile telephone 1 is shown connected to a network 2. In the example the mobile telephone 1 is a GSM phone. However, it should be emphasised that the invention can be used just as well in connection with any other telecommunications device, such as e.g. a Blue-tooth™ device, another type of radio communications device or a stationary telephone. The GSM telephone 1 is connected through an antenna 3 and a base station 4 to the GSM network 2. A large number of other GSM phones are connected to the same network. Here just two other phones 5 and 13 are shown connected to the network through the base stations 6 and 14.

When the mobile telephone 1 is connected through the network 2 to e.g. the other mobile telephone 5 for the purpose of a conversation between the users of the two telephones, the telephone circuitry 7 transmits the signals from the microphone 8 to the antenna 3, and, similarly, the signals received through the antenna are sent to the loudspeaker 9. A display 10 is used for presentation of information to the user. The telephone is further equipped with a voice recording circuit 11 and a memory 12 which are used for voice recording of a telephone conversation, i.e. the signals sent by the circuitry 7 to the speaker 9 as well as those received from the microphone 8. How the recording takes place will be described in more detail below.

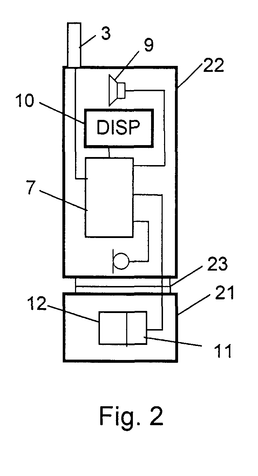

The embodiment of figure 1 requires inclusion of the voice recording circuit 11 and the memory 12 in the mobile telephone 1, which means that a special telephone having these circuits must be used. As an alternative, the embodiment of figure 2 can be used. In this embodiment a separate accessory device 21 is connected to a standard GSM telephone 22. The voice recording circuit 11 and the memory 12 are included in the accessory device 21 and connected to the phone via a standard accessory connector 23. In any other respect the system of figure 2 works like that of figure 1.

The memory 12 provides storage of information recorded during a call to or from one of the telephones 1 or 22. The information can then be retrieved at a later stage by the user of the telephone. The keypad of the telephone (not shown) can be used for the recording as well as the retrieval of the information. In the case of figure 1, a special RECORD key could be provided, but also a combination of existing keys can be used. When the RECORD key, or the combination of keys, is pressed by the user, any information spoken by the user himself or the conversation partner will be recorded and stored in the memory 12. The recording may be stopped again by pressing the key or keys a second time. Another key or another combination may be used when the user wants to replay the recording.

As mentioned before, users do not always know that a telephone conversation is being recorded, and many people do not like that their telephone conversations are recorded by the other party without their knowledge. Therefore, voice recording of telephone conversations has been (or will be) regulated by law in some countries, but it is often regulated differently in different countries. Some countries require that an indication is given by the recording party to the other party before the recording is started.

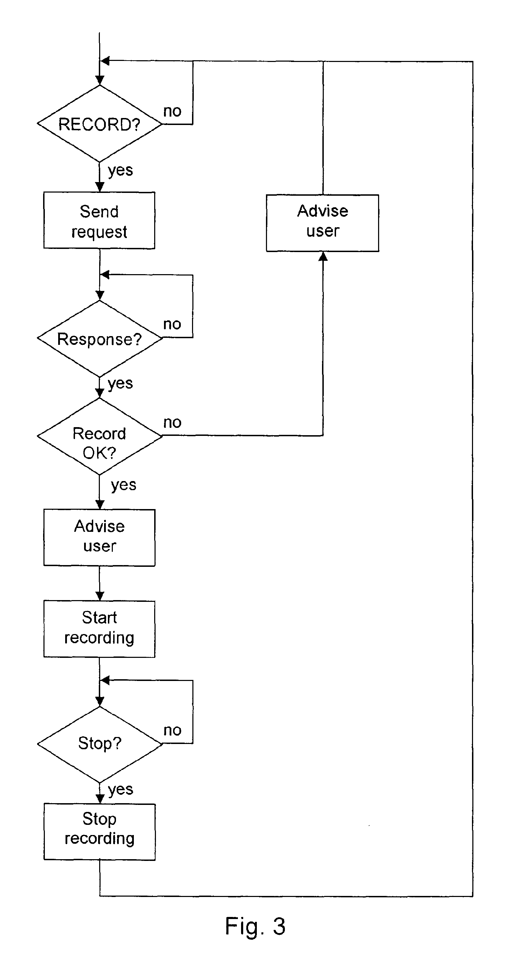

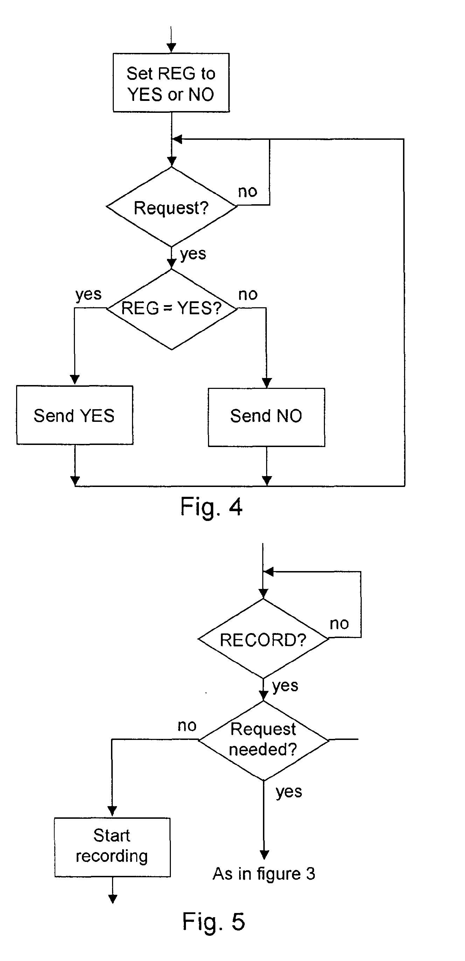

Therefore, devices according to the invention have a built-in authorisation procedure included in the software of the voice recording circuit 11. A flow chart illustrating such an authorisation procedure is shown in figure 3.

At the top of the flow chart the procedure waits for the RECORD key to be pressed, indicating that the user wants to record a call. When this happens the voice recording circuit 11 sends a message asking for authorisation to the remote party. This message could be a text message or a voice message. An example of a voice message could be: "If you allow the call to be recorded, press '1' or say 'yes'. If not, press '2' or say 'no'." When this message has been sent, the procedure waits for a response from the remote party. If no response is received the recording is not possible.

The voice recording circuit 11 includes recognition means in order to recognize the response message and to decide whether recording can be performed in dependence on that message. As appears above, also the response message may be in the form of a voice message, and therefore the voice recording circuit 11 could include a speaker-independent speech recognition facility in order to be able to recognize the words "yes" and "no". If the response does not allow the recording, this is advised to the user, either through the speaker 9 or as a message on the display 10, and the recording is not possible. The user who wanted the recording will not be able to override a refusal by the remote party and start the recording without his knowledge. However, the user can continue the conversation without recording.

If, on the other hand, the response allows the recording, the user is advised about this and the recording is started. During the recording the procedure waits for a stop key (or combination of keys) to be pressed indicating that the user does not want to record any more of the conversation. Instead of a stop key this could also be indicated by the conclusion of the conversation. The recording is then stopped and the procedure returns to its starting point.

When a telephone, in the case of figure 1 the telephone 5, receives a request for authorisation of recording from another telephone, here the telephone 1, the user can respond to the request as described above, i.e. by sending a voice or text message back to the requesting telephone. However, the telephone may also be pre-programmed to allow or refuse recording. This is illustrated in the flow chart in figure 4. When pre-programming the telephone to allow or refuse recording the user sets a register REG to YES if he allows any recording, or NO if he does not allow recording of the calls. When a request is then received from another telephone an allowance or a refusal is then automatically sent to the other telephone in the form of YES or NO in dependence on the register REG. Thus the user does not have to respond to each individual request for recording. Alternatively, the telephone may also be pre-programmed to send the appropriate response signal at the beginning of each call without waiting for a request to be received. A message such as "Recording not permitted" may then be displayed (or played) on the other phone and this other phone will not be able to record the call.

Since a requesting procedure as described above may be required in some countries and not in others, the procedure may be modified to take this situation into account. A national telephone network could then send a signal to a telephone having recording facilities to indicate whether or not the request procedure is required by law. This signal could be sent when the telephone connects to the network. The recording telephone will then automatically adapt to the local requirements by sending out the request procedure only when it is needed. Figure 5 shows how the flow chart of figure 3 may be modified to ensure this possibility. When a RECORD key is pressed to indicate that a recording is wanted, it is first checked whether the request procedure is needed. If this is not the case, the recording can be started immediately. If, however, the procedure is needed, the procedure is continued as described in figure 3.

Sometimes more than two telephones participate in a telephone conversation, i.e. the so-called conference call situation. Thus as an example, in figure 1 the mobile telephones 1, 5, and 13 may be interconnected through the GSM network 2. In this situation the procedure should preferably be arranged to allow the recording only if an authorisation is received from each of the telephones participating in the conference. However, embodiments are also possible which allow the recording if at least one or a specified number of the participating telephones gives the authorisation.

Although a preferred embodiment of the present invention has been described and shown, the invention is not restricted to it, but may also be embodied in other ways within the scope of the subject-matter defined in the following claims.

## Claims

1. A method of recording information exchanged between first (1; 22) and second (5) telecommunications devices, said recording being performed under control of said first telecommunications device,
**characterized in that** the method comprises the steps of:
• sending from said first telecommunications device (1; 22) to said second telecommunications device (5) a message requesting authorisation for the recording, and
• performing said recording only if a responding message giving said authorisation is received and recognized by said first telecommunications device (1; 22) in response to said requesting message.

2. A method of prohibiting the recording of information exchanged between first (1; 22) and second (5) telecommunications devices, said recording being performed under control of said first telecommunications device,
**characterized in that** the method comprises the steps of:
• sending from said first telecommunications device (1; 22) to said second telecommunications device (5) a message requesting authorisation for the recording, and
• prohibiting said recording if a responding message giving said authorisation is not received and recognized by said first telecommunications device (1; 22) in response to said requesting message.

3. A method according to claim 1 or 2, **characterized by** sending said requesting message as a voice message.

4. A method according to any one of claims 1 to 3, **characterized in that** it comprises the step of sending said responding message giving authorisation from said second telecommunications device (5) under control of a user of the second telecommunications device.

5. A method according to any one of claims 1 to 3, **characterized in that** it comprises the step of sending said responding message giving authorisation from said second telecommunications device (5) automatically.

6. A method according to any one of claims 1 to 5, **characterized in that** it comprises the step of advising a user of said first telecommunications device (1; 22) of whether a responding message giving authorisation for recording is received.

7. A method according to any one of claims 1 to 6, **characterized in that** said information is further exchanged between said first telecommunications device (1; 22) and at least one additional telecommunications device (13), and that said recording is only performed if a responding message giving said authorisation is also received from said at least one additional telecommunications device (13).

8. A telecommunications device (1) for exchanging information with other telecommunications devices, said telecommunications device being equipped to perform a recording of said exchanged information,
**characterized in that** it can assume a mode in which it is adapted to:
• send to another telecommunications device (5) a message requesting authorisation for the recording of information to be exchanged with said other telecommunications device, and
• perform said recording only if a responding message giving said authorisation is received in response to said requesting message.

9. A telecommunications device according to claim 8, **characterized in that** it comprises speech recognition means to detect whether the responding message in response to said requesting message, in case the responding message is a voice message, gives said authorisation.

10. A telecommunications device according to claim 8 or 9, **characterized in that** it comprises means for advising a user of the device of whether a responding message giving authorisation for recording is received.

11. A telecommunications device according to any one of claims 8 to 10, **characterized in that** it is further adapted to allow said recording if a general authorisation for the recording has been received and stored in the device.

12. A telecommunications device according to any one of claims 8 to 11, **characterized in that** the device is a mobile telephone.

13. A telecommunications device (5) for exchanging information with other telecommunications devices,
**characterized in that** it can be programmed to respond automatically to a received message requesting authorisation for the recording of information to be exchanged with another telecommunications device (1; 22).

14. An electronic accessory device (21) connectable to a telecommunications device (22) for exchanging information with other telecommunications devices, said electronic accessory device being equipped to perform a recording of said exchanged information,
**characterized in that** it can assume a mode in which it is further adapted to:
• instruct a telecommunications device (22) to which it is connected to send to another telecommunications device (5) a message requesting authorisation for the recording of information to be exchanged between the two telecommunications devices, and
• perform said recording only if a responding message giving said authorisation is received in response to said requesting message.

15. An electronic accessory device according to claim 14, **characterized in that** it comprises means for advising a user of the device of whether a responding message giving authorisation for recording is received.

16. An electronic accessory device according to claim 14 or 15, **characterized in that** it is further adapted to allow said recording if a general authorisation for the recording has been received and stored in the device.
